# FASCICULE DE BREVET EUROPEEN

(11) **EP 2 755 830 B1**
(45) Date de publication et mention de la délivrance du brevet: **18.11.2015**
(21) Numéro de dépôt: 12773026.5
(22) Date de dépôt: 12.09.2012
(51) Int. Cl.: B60C 23/00

(54) **DISPOSITIF PNEUMATIQUE PILOTE DE GONFLAGE-DEGONFLAGE AUTOMATIQUE D'UN PNEUMATIQUE**
GESTEUERTE PNEUMATISCHE VORRICHTUNG ZUM AUTOMATISCHEN AUFPUMPEN/ENTLÜFTEN EINES REIFENS
CONTROLLED PNEUMATIC DEVICE FOR AUTOMATICALLY INFLATING/DEFLATING A TYRE

(30) Priorité: 13.09.2011 FR 1158104
(43) Date de publication de la demande: 23.07.2014
(73) Titulaire: Fazekas, Stéphane, 42640 Noailly (FR)
(72) Inventeur: Fazekas, Stéphane, 42640 Noailly (FR)
(74) Mandataire: Cabinet Laurent & Charras
(86) Numéro de dépôt international: PCT/FR2012/052039
(87) Numéro de publication internationale: WO 2013/038107

(56) Documents cités:
- EP-A1- 0 511 135
- DE-A1-102007 036 201

## Description

L'invention se rattache au secteur technique des dispositifs pneumatiques pilotés, de gonflage-dégonflage automatique d'un pneumatique notamment, mais également de toutes capacités de stockage d'un fluide gazeux sous pression.

Ces dispositifs pneumatiques pilotés, de gonflage-dégonflage automatique d'un pneumatique, sont destinés à être commandés à distance et notamment à partir de l'habitacle d'un véhicule par exemple. Ces dispositifs permettent de pouvoir régler la pression des pneumatiques à partir de l'intérieur du véhicule par une simple interaction avec une interface de contrôle. Cela est notamment très utile pour des véhicules de types rallyes, militaires ou agricoles dont la pression des pneumatiques est généralement inférieure à 5 bars. Ces dispositifs sont généralement conçus pour tous pilotes de véhicules ayant besoin de faire varier la pression des pneumatiques. Et notamment faire varier la pression des pneumatiques pour s'adapter aux revêtements sur lesquels ils se déplacent, aux charges qu'ils transportent et à la vitesse de déplacement du véhicule.

D'autres applications sont possibles pour ces dispositifs et notamment toutes les applications dans lesquelles il est nécessaire d'injecter ou de retirer, automatiquement et de manière pilotée, un fluide gazeux d'une capacité de stockage dudit fluide.

L'état de la technique le plus proche dans ce domaine, et à la connaissance du demandeur, est décrit dans le document de brevet européen numéro EP 0 511 135 dont le demandeur est le titulaire.

Ce document de brevet décrit un agencement d'un dispositif pneumatique piloté de gonflage-dégonflage automatique d'un pneumatique.

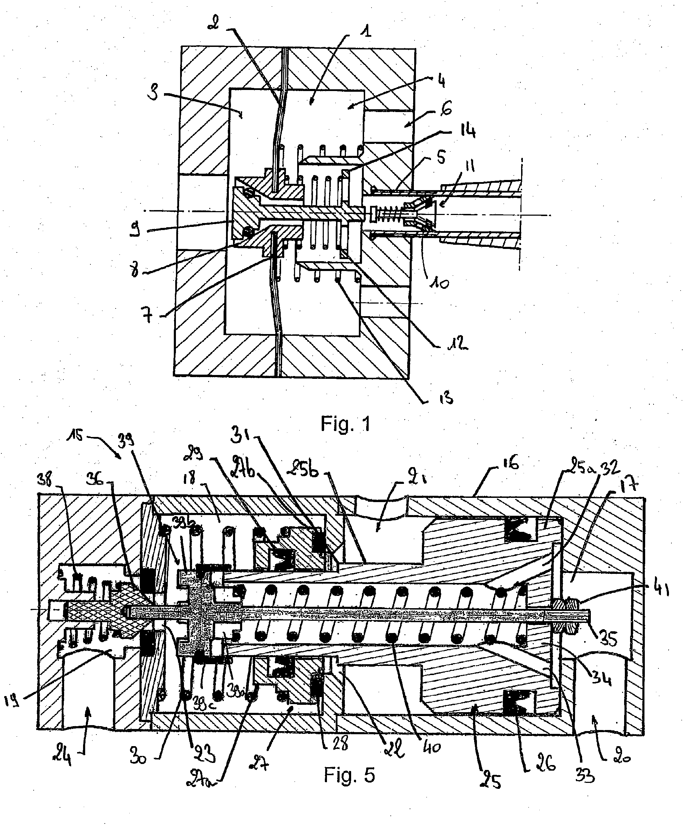

En référence à la figure 1, ce dispositif de gonflage-dégonflage d'une capacité est du type comprenant, d'une part, une cavité (1) divisée par une membrane souple (2) en deux chambres dites de pilotage (3) et d'échappement (4) communiquant, pour la première, avec un circuit de mise en pression relative et, pour la seconde, avec un alésage (5) en relation avec la capacité, et avec au moins un conduit d'échappement (6) débouchant à l'extérieur de la cavité et, d'autre part, un système à clapet (7) à même de fermer ou d'ouvrir le passage au moins entre l'alésage et le conduit d'échappement et comprenant :
- un siège (8) prévu pour coopérer avec un clapet de gonflage (9),
- un siège (10) en relation avec l'alésage (5) et prévu pour coopérer avec un clapet d'échappement (11),
- un organe élastique (12) tendant à maintenir le clapet de gonflage (9) en position fermée sur le siège (8),
- un organe élastique (13) tendant à maintenir le clapet d'échappement (11) en position de fermeture du siège (10).

Ce dispositif de l'art antérieur étant remarquable en ce que :
- le siège (8) est présenté par la membrane (2) dans la chambre de pilotage (3),
- le clapet de gonflage (7) et le clapet d'échappement (11) sont montés en opposition, de part et d'autre de la membrane (2) et sont sensibles à la position de celle-ci, de manière à former un équipage mobile de deux clapets asservis à la membrane (2),
- et l'organe élastique (13) est associé à la membrane (2),
et en ce qu'il est prévu une butée (14) limitant la course de l'équipage en ouverture du clapet d'échappement (11).

Un inconvénient de ce dispositif est que son agencement est réalisé de sorte que le dégonflage de la capacité se fait en basse pression. Cela signifie qu'il est impossible de pouvoir, lorsque ledit dispositif est assujetti à un dispositif de mesure, mesurer en basse pression. En effet, en voulant effectuer une mesure d'une pression relativement basse, on passerait directement en phase de dégonflage du pneumatique au lieu de réaliser la mesure. De nombreux véhicules utilisent de faibles pressions de gonflage inférieures à 5 bars, notamment les véhicules agricoles, de recherches géologiques, les 4x4, etc.

L'invention s'est fixée pour but de remédier à cet inconvénient d'une manière simple, sûre, efficace et rationnelle.

Le problème que se propose de résoudre l'invention est donc de réaliser un dispositif pneumatique piloté de gonflage-dégonflage automatique d'un pneumatique notamment, qui permette de gérer des pressions en limite basse. Cela signifie qu'avec un tel dispositif, il sera possible de gonfler un pneumatique à basse pression mais aussi de mesurer une faible pression.

Pour résoudre un tel problème, il a été conçu et mis au point un dispositif pneumatique piloté de gonflage-dégonflage automatique d'un pneumatique notamment, comprenant un corps creux comprenant un orifice d'admission assujetti à des moyens d'injection d'un fluide gazeux sous pression, notamment de l'air, un orifice de gonflage en communication avec le pneumatique à une pression (PO) et, un orifice d'échappement dudit fluide gazeux vers l'extérieur du corps creux.

Selon l'invention, ce dispositif comprend un piston monté coulissant dans au moins une chambre du corps sous l'effet de l'injection du fluide gazeux sous pression par l'intermédiaire de l'orifice d'admission, ledit piston coopérant avec un ensemble mobile en combinaison avec un clapet d'échappement de sorte que :
- sous l'effet de l'injection du fluide gazeux à une pression (P1>P0) le piston et l'ensemble mobile sont déplacés linéairement à l'encontre d'un premier organe élastique par rapport au clapet d'échappement, qui demeure fixe, jusqu'à une position de butée dudit piston et dudit ensemble correspondant à l'ouverture de l'orifice de gonflage et à la fermeture de l'orifice d'échappement,
- sous l'effet de l'injection du fluide gazeux à une pression (P2>P1), le piston est déplacé à l'encontre d'un deuxième organe élastique et par rapport à l'ensemble mobile qui demeure en position de butée, provoquant la fermeture d'un organe de gonflage (39) et le déplacement du clapet d'échappement à l'encontre d'un troisième organe élastique correspondant à l'ouverture de l'orifice d'échappement à partir de l'orifice de gonflage qui demeure ouvert.

De cette manière l'injection d'un fluide gazeux à une pression P1 supérieure à P0 entraine l'ouverture du clapet d'injection et permet de gonfler le pneumatique relié à l'orifice de gonflage. Et l'injection d'un fluide gazeux à une pression P2 supérieure à P1 entraine l'ouverture du clapet d'injection et, du clapet d'échappement et la fermeture de l'organe de gonflage, ce qui permet le dégonflage du pneumatique. L'injection dudit fluide gazeux se fait de manière pilotée par l'intermédiaire d'une interface de contrôle à partir de l'habitacle d'un véhicule par exemple.

De préférence, le corps comprend trois chambres internes agencées de manière successives, ledit piston est apte à coulisser dans la première chambre, divisant alors celle-ci en deux zones de pressions différentes, des ouvertures sont réalisées entre la première zone de la première chambre et la deuxième chambre et les deuxième et troisième chambres permettant ainsi leur communication, la première zone de la première chambre étant ménagée dudit orifice d'admission d'un premier côté dudit piston et la deuxième zone de la première chambre étant ménagée dudit orifice d'échappement de l'autre côté dudit piston, et la troisième chambre étant ménagée dudit orifice de gonflage.

Selon une forme de réalisation préférée, dans le dispositif selon l'invention, ledit piston comprend une tête de piston creuse destinée à coulisser de manière étanche dans la première chambre, et un corps de piston creux, en communication avec ladite tête de piston et destiné à coulisser de manière étanche dans le clapet d'échappement obturant l'ouverture réalisée entre la deuxième zone de la première chambre et la deuxième chambre, le corps de piston débouchant dans la deuxième chambre et étant obturé par l'élément mobile, ledit corps et ladite tête de piston sont en communication avec l'orifice d'admission

Ledit élément mobile comprend un axe central monté coulissant dans le corps creux, un clapet d'injection et un organe de gonflage montés fixes sur ledit axe, ledit clapet d'injection étant agencé pour obturer l'ouverture entre les deuxième et troisième chambres, et ledit organe de gonflage étant agencé pour obturer le passage entre la première zone de la première chambre et la deuxième chambre.

De préférence, ledit organe de gonflage comprend une première partie de guidage se présentant sous la forme d'un élément cylindrique, fixe sur l'axe et venant s'insérer en partie et de manière non étanche, dans l'extrémité du corps de piston, une deuxième partie faisant office de clapet de gonflage se présentant également sous la forme d'un élément cylindrique de diamètre sensiblement égal à celui du corps de piston et destiné à venir en contact avec ledit corps de piston, et une troisième partie se présentant sous la forme d'un clapet anti-retour , influencé par le sens de passage du fluide gazeux, de manière à être libre dans le sens allant de la première zone de la première chambre vers la deuxième chambre, et étanche à un flux rapide allant dans le sens inverse et non étanche à un flux lent allant dans ce même sens inverse.

Avantageusement et pour permettre plus de confort d'utilisation et de précision au dispositif selon l'invention, celui-ci est assujetti à des moyens de mesure de la pression qui sont reliés à l'orifice d'admission.

De cette manière il est possible de réaliser une mesure de la pression présente dans le pneumatique au moyen de tout moyen permettant une mesure de pression, tel qu'un manomètre par exemple. Ce dispositif permet également de pouvoir mesurer la pression en statique.

Dans une forme de réalisation particulière de l'invention, ledit premier organe élastique est, fixé à une extrémité, audit clapet d'injection et, à l'autre extrémité, en butée contre la paroi opposée de la troisième chambre. Ledit deuxième organe élastique est agencé à l'intérieur dudit piston entre le fond dudit piston et la première partie de guidage dudit organe de gonflage. Et ledit troisième organe élastique est fixé à une extrémité audit clapet d'échappement et à l'autre extrémité en butée contre la paroi opposée de ladite deuxième chambre.

D'autres caractéristiques et avantages de l'invention ressortiront clairement de la description qui en est faite ci-après, à titre indicatif et nullement limitatif, en référence aux figures annexées, dans lesquelles:
- la figure 1 est une vue en coupe longitudinale d'un dispositif pneumatique piloté de gonflage-dégonflage automatique d'un pneumatique notamment selon l'art antérieur ;
- la figure 2 est une vue en coupe longitudinale d'un dispositif pneumatique piloté de gonflage-dégonflage automatique d'un pneumatique notamment, selon l'invention, en position de repos ;
- la figure 3 est une vue en coupe longitudinale d'un dispositif pneumatique piloté de gonflage-dégonflage automatique d'un pneumatique notamment, selon l'invention, en position de gonflage ou de mesure ;
- la figure 4 est une vue en coupe longitudinale d'un dispositif pneumatique piloté de gonflage-dégonflage automatique d'un pneumatique notamment, selon l'invention, en position de dégonflage ;
- la figure 5 est une vue en coupe longitudinale d'une autre forme de réalisation d'un dispositif pneumatique piloté de gonflage-dégonflage automatique d'un pneumatique notamment, selon l'invention, en position de repos.
- La figure 6 est une vue en coupe longitudinale représentant l'ensemble élément mobile, coopérant avec le piston, selon une autre forme de réalisation de l'invention et en position de repos ;

Par simplification, les parties ou éléments d'une forme de réalisation qui se retrouvent de manière identique ou similaire dans une autre forme de réalisation seront identifiés par les mêmes références numériques et ne seront pas à nouveau décrits.

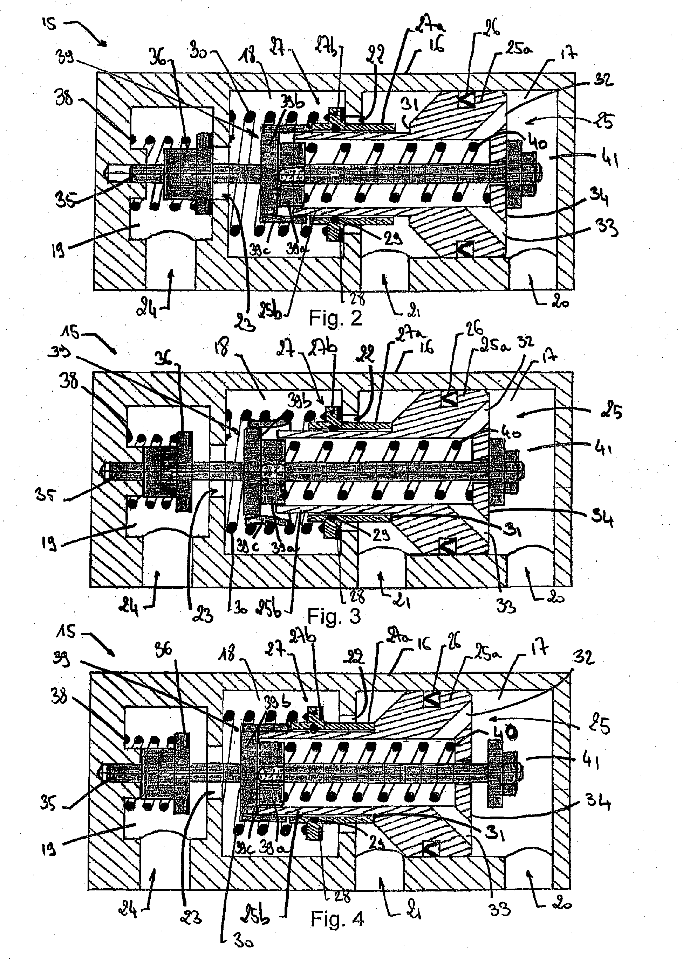

En référence aux figures 2 à 5, le dispositif (15) pneumatique piloté de gonflage-dégonflage automatique d'un pneumatique notamment, comprend un corps creux (16) de forme, non limitative, sensiblement cylindrique et comprend trois chambres internes (17, 18, 19) agencées de manière successives.

La première chambre (17) comprend un orifice d'admission (20), et un orifice d'échappement (21). L'orifice d'admission (20) est destiné à être assujetti à des moyens d'injection de fluide gazeux, généralement constitués par des éléments de tuyauteries, des joints tournants, des moyens de régulation de la pression et d'un compresseur par exemple, et à des moyens de mesure de la pression tel un manomètre. L'orifice d'échappement (21) est en communication avec l'extérieur du corps creux (16). Cela permet lors du dégonflage du pneumatique, d'évacuer le fluide gazeux directement hors du corps creux (16) sans repasser par les joints tournants et les moyens de régulation de la pression. Des ouvertures (22, 23) sont réalisées entre les première (17) et deuxième (18) chambres et les deuxième (18) et troisième (19) chambres permettant ainsi leurs communications. La troisième chambre (19) comprend un orifice de gonflage (24) destiné à être relié au pneumatique à gonfler-dégonfler ou dont la pression est à mesurer. Cet orifice de gonflage (24) peut bien entendu être relié à toute autre capacité de stockage de fluide gazeux sous pression.

Les chambres (17, 18, 19) et les orifices (20, 21, 24) sont de formes généralement cylindriques.

Les liaisons entre les orifices (20, 21, 24) et les moyens de mesure, d'injection de fluide gazeux ou avec le pneumatique, sont réalisées par l'intermédiaire de tuyauteries flexibles bien connues par l'homme du métier. Le dispositif (15) étant monté sur la jante du véhicule, la liaison entre le compresseur et ledit dispositif (15) se fait par l'intermédiaire d'un système comprenant un joint tournant. Ce système ne faisant pas parti de l'invention et étant également bien connu de l'homme du métier, il ne sera pas décrit plus en détail.

Un piston (25) est agencé dans la première chambre (17) et divise alors celle-ci en deux zones (17a, 17b) de pressions différentes. L'orifice d'admission est présent dans la première zone (17a) et l'orifice d'échappement est présent dans la deuxième zone (17b). Ledit piston (25) est apte à coulisser entre l'orifice d'admission (20) et l'orifice d'échappement (21). Ce piston (25) comprend une tête de piston (25a) et un corps de piston (25b). La tête de piston (25a) est de forme cylindrique de diamètre sensiblement égal à celui de la première chambre (17). Cette tête de piston (25a) comprend également un joint annulaire (26) agencé sur sa périphérie pour lui permettre de coulisser dans ladite première chambre (17) de manière étanche.

Cette tête de piston (25a) se prolonge par le corps de piston (25b) qui est également cylindrique avec un diamètre inférieur à celui de la tête de piston (25a). Le diamètre du corps de piston (25b) est tel qu'il est apte à pénétrer dans la deuxième chambre (18) au travers de l'ouverture (22) présente. Ce corps de piston (25b) est apte à coulisser de manière étanche dans un clapet d'échappement (27) agencé dans la deuxième chambre (18) pour obturer ladite ouverture (22). Le clapet d'échappement (27) est de cette manière de la forme d'un manchon cylindrique (27a) comprenant un épaulement (27b) destiné à venir obturer ladite ouverture (22). L'épaulement (27b) comprend sur sa face en regard avec l'ouverture (22), un élément formant joint (28) pour assurer l'étanchéité. Le manchon (27a) est ainsi destiné à recevoir le corps de piston (25b) et comprend de cette manière un joint annulaire (29) sur sa périphérie interne pour assurer également l'étanchéité.

Le clapet d'échappement (27) est maintenu en position d'obturation de l'ouverture (22) par l'intermédiaire d'un ressort (30) fixé à une extrémité audit manchon (27a) et à l'autre extrémité en butée contre le la paroi opposée de ladite deuxième chambre (18).

Un épaulement (31) est également réalisé entre la tête de piston (25a) et le corps de piston (25b). Cet épaulement (31) est destiné à coopérer avec l'extrémité du manchon (27a) pour, lorsque le piston (25) coulisse et arrive en fin de course, venir en contact contre ledit manchon (27a) et le faire coulisser à l'encontre dudit ressort (30) pour libérer l'ouverture (22) présente entre la deuxième zone (17b) de la première chambre (17) et deuxième (18) chambres.

Ledit piston (25) est creux et ouvert aux deux extrémités. L'extrémité se trouvant dans la deuxième chambre (18) est entièrement ouverte et l'extrémité se trouvant dans la première chambre (17) est ouverte par l'intermédiaire d'au moins un canal (32, 33), laissant ainsi au piston (25) une face de fond (34). Le piston (25) est de cette manière en communication, à une extrémité, avec l'orifice d'admission (20) et, à l'autre extrémité, avec la deuxième chambre (18). Le piston (25) coopère également avec un élément mobile (35, 36, 39) comprenant un axe (35) sur lequel est monté un clapet d'injection (36) destiné à obturer l'ouverture (23) présente entre les deuxième (18) et troisième (19) chambres. Ce clapet d'injection (36) est associé à un ressort (38) fixé à une extrémité audit clapet d'injection (36) et à l'autre extrémité en butée contre la paroi opposée de la troisième chambre (19). Un organe de gonflage (39) est également monté fixe sur ledit axe (35) et coopère avec l'extrémité ouverte dudit corps de piston (25b). L'organe de gonflage (39) comprend trois parties, une première partie de guidage (39a) se présentant sous la forme d'un élément cylindrique fixe sur l'axe (35), comprenant des orifices pour laisser passer le fluide gazeux, et venant s'insérer en partie et de manière non étanche, dans l'extrémité du corps de piston (25b), afin de guider ledit piston (25) pour le tenir centré. La deuxième partie (39b) de l'organe de gonflage (39) fait office de clapet de gonflage et se présente également sous la forme d'un élément cylindrique de diamètre sensiblement égal à celui du corps de piston (25b) et destiné à venir en contact avec ledit corps de piston (25b). Cette deuxième partie (39b) est également fixe sur l'axe (35). La troisième partie (39c) de l'organe de gonflage (39) se présente sous la forme d'une bague ou d'une rondelle libre ou souple en matériau élastomère, notamment en caoutchouc, agencée de manière affleurant et influencée par le sens de passage du fluide gazeux. Cette troisième partie joue le rôle d'un clapet anti-retour (39c).

Cette troisième partie (39c) est donc un clapet anti-retour et a pour but de retenir un flux rapide allant de la deuxième chambre (18) à la première zone (17a) de la chambre (17) pour faciliter la mise à l'air libre de la première zone (17a) de la chambre (17). Ce clapet anti-retour (39c) n'est pas étanche à un flux lent de manière à compenser de légères fuites dans la tuyauterie pour stabiliser la phase de mesure notamment.

Un élément élastique, notamment un ressort (40) est agencé entre la première partie (39a) de l'organe de gonflage (39) et la face de fond (34) du piston (25) repoussant ce dernier contre un élément de butée (41) fixé à l'extrémité de l'axe (35).

Lors de l'utilisation et en référence tout d'abord à la figure 2 qui représente la phase de repos du dispositif (15), les première (17) et deuxième (18) chambres sont à la pression atmosphérique et la troisième chambre (19) est à la pression du pneumatique, si un pneumatique est relié à l'orifice de gonflage (24). Le piston (25) est dans une position de repos. Le clapet d'injection (36) de la troisième chambre (19) est fermé et maintenu dans cette position par le ressort (38) et également par la pression du pneumatique. L'organe de gonflage (39) est en position ouverte, c'est-à-dire que la deuxième partie (39b) ne vient pas en contact avec l'extrémité du corps de piston (25b). Le clapet d'échappement (27) est fermé et maintenu dans cette position par le ressort (30).

On a ainsi, et de manière avantageuse par rapport à l'état de la technique, qu'un seul clapet (36) qui ouvre ou qui ferme la liaison avec le pneumatique.

Dans ce cas de figure, rien ne se passe, c'est un des avantages de l'invention, car on a les première (17) et deuxième (18) chambres qui sont à la pression atmosphérique, ainsi le dispositif (15) n'est pas en pression permanente. Il n'y a ainsi, en phase de repos, aucun effort exercé sur les joints tournants agencés entre l'orifice d'admission (20) et le moyen d'injection de fluide gazeux sous pression.

En référence à la figure 3 qui représente la phase de gonflage, la première zone (17a) de la première chambre (17) reçoit du fluide gazeux sous pression. Cette chambre est alors à une pression P1 supérieure à la pression P0 du pneumatique. Cela entraine le coulissement du piston (25) jusqu'à une position de gonflage, dans laquelle l'épaulement (31) présent entre la tête de piston (25a) et le corps de piston (25b) vient en contact avec le manchon (27a) du clapet d'échappement (27), sans le déplacer. Ce déplacement du piston (25) entraine le déplacement simultané de l'élément mobile (35, 36, 39), à savoir, l'axe (35), le clapet d'injection (36) et l'organe de gonflage (39) jusqu'à une position de butée de l'un des trois éléments. Dans cette forme de réalisation c'est le clapet d'injection (36) qui vient en butée contre la paroi opposée de la troisième chambre (19). De ce fait le ressort (38) maintenant le clapet en position fermée se comprime et le clapet d'injection (36) libère l'ouverture (23) présente entre la deuxième (18) et la troisième (19) chambre. Le clapet d'échappement (27) demeurant fixe et en position d'obturation. Arrivé en butée, la pression est telle qu'elle ne déplace aucun autre élément. Le fluide gazeux passe alors de la première zone (17a) de la première chambre (17) dans le piston (25), s'échappe par le clapet anti-retour (39c), qui est passant dans ce sens, de l'organe de gonflage (39) qui est resté ouvert, passe dans la deuxième chambre (18) et traverse la troisième chambre (19), le clapet d'injection (36) étant ouvert, pour de cette manière gonfler le pneumatique.

Pour réaliser cette étape de gonflage, il faut bien entendu que la pression P1 du fluide gazeux injectée par l'orifice d'admission (20), soit supérieure à celle du pneumatique P0. Mais également que la force exercée par ladite pression soit suffisante pour venir à l'encontre de la force de rappel du ressort (38) tendant à maintenir en position fermée le clapet d'injection (36) de la troisième chambre (19). Cette force exercée par la pression doit également être suffisamment faible pour ne pas venir à l'encontre de la force de rappel exercée par le ressort (40) à l'intérieur du piston (25) et ainsi ne pas déclencher la phase de dégonflage.

Il est évident que les diamètres des chambres (17, 18, 19) et les raideurs des ressorts (30, 38, 40) sont calculés et modifiables à la conception du dispositif (15) pour obtenir les plages de pressions souhaitées.

En phase de mesure, et toujours en référence à la figure 3, on a exactement le même agencement, la différence étant que l'on arrête l'injection de fluide, sans remettre à l'air libre la tuyauterie. Les éléments du dispositif (15) restent ainsi dans la même position que pour la phase de gonflage, la pression du pneumatique s'équilibre avec celle des trois chambres (17, 18, 19) et celle de la tuyauterie par l'intermédiaire de laquelle on peut lire la valeur de la pression en statique sur un manomètre notamment. Le clapet anti-retour (39c) n'étant pas étanche à un flux lent du fluide gazeux, des légères fuites, sur la tuyauterie et les moyens d'injections, sont compensées pour équilibrer la pression entre le pneu et les moyens de mesure.

En référence à la figure 4 qui représente la phase de dégonflage, la première zone (17a) de la première chambre (17) reçoit du fluide gazeux sous une pression P2 plus importante que pour la phase de gonflage. Cette chambre est alors à une pression P2 supérieure à la pression P1. Cela entraine le coulissement du piston (25) jusqu'à une position de dégonflage, dans laquelle l'épaulement (31) présent entre la tête de piston (25a) et le corps de piston (25b) vient en contact avec le manchon (27a) du clapet d'échappement (27), et le déplace légèrement de manière à ouvrir ledit clapet d'échappement (27) et libérer l'ouverture (22). Ce déplacement du piston (25) dans cette position de dégonflage emmène l'extrémité du corps de piston (25b) en contact avec le clapet de gonflage (39b), de l'organe de gonflage (39) qui a pour conséquence la fermeture de celui-ci. Ce déplacement entraine également le déplacement simultané de l'élément mobile (35, 36, 39), à savoir, l'axe (35), le clapet d'injection (36) et l'organe de gonflage (39) jusqu'à une position de butée de l'un des trois éléments. Dans cette forme de réalisation c'est le clapet d'injection (36) qui vient en butée contre la paroi opposée de la troisième chambre (19). De ce fait le ressort (38) maintenant le clapet d'injection (36) en position fermée se comprime et le clapet d'injection (36) libère l'ouverture (23) présente entre la deuxième (18) et la troisième (19) chambre. Les deux clapets (27, 36) étant en positions ouvertes, le fluide gazeux passe alors du pneumatique vers la troisième chambre (19), puis, le clapet d'injection (36) étant ouvert et l'organe de gonflage (39) étant fermé, vers la deuxième chambre (18), puis le clapet d'échappement (27) étant lui aussi ouvert, vers la deuxième zone (17b) de la première chambre (17) du côté de l'orifice d'échappement (21), pour de cette manière dégonfler le pneumatique.

Pour réaliser cette phase de dégonflage, il faut bien entendu que la force exercée par la pression injectée par l'orifice d'admission (20) soit suffisamment importante pour venir à l'encontre de la force de rappel des trois ressorts (30, 38, 40) présents dans le dispositif (15) pour permettre le déplacement des clapets (36, 27) et celui du piston (25) jusqu'à la position de dégonflage.

La phase de retour à la position de repos est caractérisée par le fait qu'il y ait mise à l'air libre de la tuyauterie au niveau de l'orifice d'admission (20). De ce fait, le fluide gazeux du pneumatique est freiné par le clapet anti-retour (39c) de l'organe de gonflage (39) qui est étanche à un flux rapide. De ce fait, la pression sur le piston (25) s'annule et il peut revenir à sa position de repos.

La figure 5 représente une deuxième forme de réalisation du dispositif (15) selon l'invention. Cette deuxième forme de réalisation comprend les mêmes éléments que la première mais diffère en ce que la butée de l'élément mobile est réalisée par l'organe de gonflage (39). Ce qui assure une meilleure stabilité en position de dégonflage.

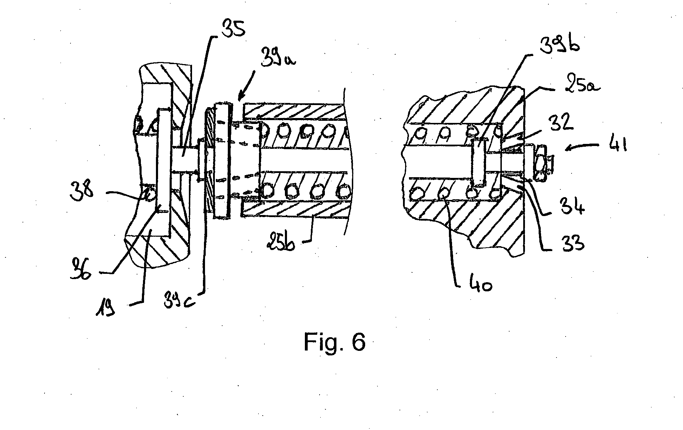

En référence à la figure 6, une autre forme de réalisation est possible concernant l'élément mobile (35, 36, 39) du piston (25). Dans cette forme de réalisation, le clapet anti-retour (39c) de l'organe de gonflage (39) est représenté par une rondelle souple. Le clapet de gonflage (39b) est agencé dans le corps du piston (25), de manière à laisser passer le fluide gazeux par les canaux (32, 33) en phase de gonflage, à la pression P1 dans la première zone (17a) de la première chambre (17), et à venir en contact avec le fond (34) du piston (25) pour obturer les canaux (32, 33) et fermer l'organe de gonflage (32, 33), en phase de dégonflage, à la pression P2 dans la première zone (17a) de la première chambre (17).

Comme il ressort de ce qui précède, l'invention fournit un dispositif (15) pneumatique piloté de gonflage-dégonflage automatique d'un pneumatique notamment, donnant entière satisfaction et ayant en particulier les avantages de pouvoir gérer les pressions en limite basse, c'est-à-dire de pouvoir mesurer une faible pression, de gonfler un pneumatique à basse pression et de dégonfler en haute pression. Ce dispositif permet également d'avoir une durée de vie plus longue que certains dispositifs de l'art antérieur.

Il va de soi que l'invention n'est pas limitée à la forme de réalisation décrite ci-dessus à titre d'exemple mais qu'elle s'étend à toutes les formes de réalisations couvertes par les revendications ci-annexées.

## Revendications

1. Dispositif (15) pneumatique piloté de gonflage-dégonflage automatique d'un pneumatique notamment, comprenant un corps creux (16) comprenant un orifice d'admission (20) assujetti à des moyens d'injection d'un fluide gazeux sous pression, notamment de l'air, un orifice de gonflage (24) en communication avec le pneumatique à une pression P0 et, un orifice d'échappement (21) dudit fluide gazeux vers l'extérieur du corps creux (16), le dispositif comprenant un piston (25) monté coulissant dans au moins une chambre (17) du corps (16) sous l'effet de l'injection du fluide gazeux sous pression par l'orifice d'admission (20), ledit piston (25) coopérant avec un ensemble mobile (35, 36, 39) en combinaison avec un clapet d'échappement (27) de sorte que :
- sous l'effet de l'injection du fluide gazeux à une pression P1>P0 le piston (25) et l'ensemble mobile (35, 36, 39) sont déplacés linéairement à l'encontre d'un premier organe élastique (38) par rapport au clapet d'échappement (27), qui demeure fixe, jusqu'à une position de butée dudit piston (25) et dudit ensemble (35, 36, 39) correspondant à l'ouverture du clapet d'injection (36) et à la fermeture du clapet d'échappement (27), **caractérisé en ce que** :
- sous l'effet de l'injection du fluide gazeux à une pression P2>P1, le piston (25) est déplacé à l'encontre d'un deuxième organe élastique (40) et par rapport à l'ensemble mobile (35, 36, 39) qui demeure en position de butée, provoquant la fermeture d'un organe de gonflage (39) et le déplacement du clapet d'échappement (27) à l'encontre d'un troisième organe élastique (30) correspondant à l'ouverture du clapet d'échappement (27) à partir du clapet d'injection (36) qui demeure ouvert.

2. Dispositif (15) selon la revendication 1, ***caractérisé en ce que*** le corps comprend trois chambres internes (17, 18, 19) agencées de manière successives, ledit piston (25) étant apte à coulisser dans la première chambre (17), divisant alors celle-ci en deux zones (17a, 17b) de pressions différentes, des ouvertures (22, 23) sont réalisées entre la deuxième zone (17b) de la première chambre (17) et la deuxième chambre (18) et les deuxième (18) et troisième (19) chambres permettant ainsi leur communication.

3. Dispositif (15) selon la revendication 2, ***caractérisé en ce que*** la première zone (17a) de la première chambre (17) présente l'orifice d'admission (20) d'un premier côté dudit piston (25) et la deuxième zone (17b) de la première chambre (17) présente l'orifice d'échappement (21) de l'autre côté dudit piston (25), et la troisième chambre (19) présente l'orifice de gonflage (24).

4. Dispositif (15) selon les revendications 2 à 3, ***caractérisé en ce que*** ledit piston (25) comprend une tête de piston (25a) creuse destinée à coulisser de manière étanche dans la première chambre (17), et un corps de piston (25b) creux, en communication avec ladite tête de piston (25a) et destiné à coulisser de manière étanche dans le clapet d'échappement (27) obturant l'ouverture (22) réalisée entre la deuxième zone (17b) de la première chambre (17) et la deuxième chambre (18).

5. Dispositif (15) selon la revendication 4, ***caractérisé en ce que*** le corps de piston (25b) débouche dans la deuxième chambre (18) et est obturé par l'élément mobile (35, 36, 39), ledit corps (25b) et ladite tête de piston (25a) sont en communication avec l'orifice d'admission (20).

6. Dispositif (15) selon les revendications 2 à 5, ***caractérisé en ce que*** ledit élément mobile (35, 36, 39) comprend un axe central (35) monté coulissant dans le corps creux (16), un clapet d'injection (36) et l'organe de gonflage (39) montés sur ledit axe (35), ledit clapet d'injection (36) étant agencé pour obturer l'ouverture (23) entre les deuxième (18) et troisième (19) chambres.

7. Dispositif (15) selon la revendication 6, ***caractérisé en ce que*** ledit organe de gonflage (39) comprend une première partie de guidage (39a) se présentant sous la forme d'un élément cylindrique, fixe sur l'axe (35) et venant s'insérer en partie et de manière non étanche, dans l'extrémité du corps de piston (25b), une deuxième partie (39b) faisant office de clapet de gonflage se présentant également sous la forme d'un élément cylindrique de diamètre sensiblement égal à celui du corps de piston (25b) et destiné à venir en contact avec ledit corps de piston (25b), et une troisième partie (39c) se présentant sous la forme d'un clapet anti-retour , influencé par le sens de passage du fluide gazeux, de manière à être libre dans le sens allant de la première zone (17a) de la première chambre (17) vers la deuxième chambre (18), et étanche à un flux rapide allant dans le sens inverse et non étanche à un flux lent allant dans ce même sens inverse.

8. Dispositif (15) selon les revendications 1 à 7, ***caractérisé en ce qu***'il est assujetti à des moyens de mesure de la pression qui sont reliés à l'orifice d'admission (20).

9. Dispositif (15) selon les revendications 2 à 8, ***caractérisé en ce que*** ledit premier organe élastique (38) est fixé à une extrémité audit clapet d'injection (36) et à l'autre extrémité en butée contre la paroi opposée de la troisième chambre (19).

10. Dispositif (15) selon les revendications 4 à 9, ***caractérisé en ce que*** ledit deuxième organe élastique (40) est agencé à l'intérieur dudit piston entre le fond dudit piston et la première partie de guidage (39a) dudit organe de gonflage (39).

11. Dispositif (15) selon les revendications 2 à 10, ***caractérisé en ce que*** ledit troisième organe élastique (30) est fixé à une extrémité audit clapet d'échappement (27) et à l'autre extrémité en butée contre le la paroi opposée de ladite deuxième chambre (18).

## Patentansprüche

1. Gesteuerte, pneumatische Vorrichtung (15) zum automatischen Auf- / Abpumpen einer Pneumatik, insbesondere umfassend einen Hohlkörper (16), umfassend eine Einlassöffnung (20), die Einspritzmitteln eines unter Druck stehenden gasförmigen Mediums, insbesondere Luft, unterworfen ist, eine Aufpumpöffnung (24) in Kommunikation mit der Pneumatik unter einem Druck P0 und eine Auslassöffnung (21) des genannten gasförmigen Mediums zur Außenseite des hohlen Körpers (16), wobei die Vorrichtung einen Kolben (25), der gleitend in wenigstens eine Kammer (17) des Körpers (16) unter der Wirkung des Einspritzens des gasförmigen Mediums unter Druck durch die Einlassöffnung (20) montiert ist, umfasst, wobei der genannte Kolben (25) mit einer mobilen Struktur (35, 36, 39) in Kombination mit einer Auslassklappe (27) derart zusammenwirkt, dass:
- unter der Wirkung des Einspritzens des gasförmigen Mediums unter einem Druck P1 > P0 der Kolben (25) und die mobile Struktur (35, 36, 39) linear in Richtung zu einem ersten elastischen Organ (38) im Verhältnis zur Auslassklappe (27), die fest bleibt, bis zu einer Anschlagposition des genannten Kolbens (25) und der genannten Struktur (35, 36, 39) verschoben sind, die der Öffnung der Einspritzklappe (36) und dem Verschließen der Auslassklappe (27) entspricht, ***dadurch gekennzeichnet, dass:***
- unter der Wirkung des Einspritzens des gasförmigen Mediums unter einem Druck P2 > P1 der Kolben (25) in Richtung zu einem zweiten elastischen Organ (40) und im Verhältnis zur mobilen Struktur (35, 36, 39) verschoben wird, die in der Anschlagsposition bleibt und den Verschluss eines Aufpumporgans (39) und die Verschiebung der Auslassklappe (27) in Richtung zu einem dritten elastischen Organ (30) hervorruft, das der Öffnung der Auslassklappe (27) ab der Einspritzklappe (36) entspricht, die offen bleibt.

2. Vorrichtung (15) gemäß Anspruch 1, ***dadurch gekennzeichnet*, *dass*** der Körper drei interne Kammern (17, 18, 9) umfasst, die auf sukzessive Weise angeordnet sind, wobei der genannte Kolben (25) zum Gleiten in der ersten Kammer (17) geeignet ist und damit diese dann zwei Bereiche (17a, 17b) mit unterschiedlichen Drücken unterteilt, Öffnungen (22, 23) zwischen dem zweiten Bereich (17b) der ersten Kammer (17) und der zweiten Kammer (18) realisiert sind und die zweite (18) und die dritte Kammer (19) somit ihre Kommunikation zulassen.

3. Vorrichtung (15) gemäß Anspruch 2, ***dadurch gekennzeichnet*, *dass*** der erste Bereich (17a) der ersten Kammer (17) die Einlassöffnung (20) einer ersten Seite des genannten Kolbens (25) aufweist und der zweite Bereich (17b) der ersten Kammer (17) die Auslassöffnung (21) der anderen Seite des genannten Kolbens (25) aufweist, und die dritte Kammer (19) die Aufblasöffnung (24) aufweist.

4. Vorrichtung (15) gemäß Anspruch 2 bis 3, ***dadurch gekennzeichnet, dass*** der genannte Kolben (25) einen hohlen Kolbenkopf (25a), der dazu bestimmt ist, auf abgedichtete Weise in der ersten Kammer (17) zu gleiten, und einen hohlen Kolbenkörper (25b) in Kommunikation mit dem genannten Kolbenkopf (25a), und der zum Gleiten auf abgedichtete Weise in der Auslassklappe (27) bestimmt ist und dabei die Öffnung (22) verschließt, die zwischen dem zweiten Bereich (17b) der ersten Kammer (17) und der zweiten Kammer (18) realisiert ist, umfasst.

5. Vorrichtung (15) gemäß Anspruch 4, ***dadurch gekennzeichnet*, *dass*** der Kolbenkörper (25b) in die zweite Kammer (18) mündet und durch das mobile Element (35, 36, 39) verschlossen ist, wobei der genannte Körper (25b) und der genannte Kolbenkopf (25a) mit der Einlassöffnung (20) in Kommunikation sind.

6. Vorrichtung (15) gemäß Anspruch 2 bis 5, ***dadurch gekennzeichnet*, *dass*** das genannte mobile Element (35, 36, 39) eine zentrale Achse (35), die gleitend in dem hohlen Körper (16) montiert ist, eine Einspritzklappe (36) und das Aufpumporgan (39), die auf der genannten Achse (35) montiert sind, umfasst, wobei die genannte Einspritzklappe (36) angeordnet ist, um die Öffnung (23) zwischen der zweiten (18) und dritten (19) Kammer zu verschließen.

7. Vorrichtung (15) gemäß Anspruch 6, ***dadurch gekennzeichnet, dass*** das genannte Aufpumporgan (39) einen ersten Führungsteil (39a) umfasst, der sich in Form eines zylindrischen Elements darstellt, das auf der Achse (35) fest ist und zum Teil und nicht abgedichtet in das Ende des Kolbenkörpers (25b) eingefügt wird, wobei ein zweiter Teil (39b) als Aufpumpklappe fungiert, der sich ebenfalls in Form eines zylindrischen Elements mit einem Durchmesser von deutlich gleich dem des Kolbenkörpers (25b) darstellt und dazu bestimmt ist, mit dem genannten Kolbenkörper (25b) und einem dritten Teil (39c) in Kontakt zu kommen, der sich in Form einer Anti-Rückschlagklappe darstellt, die durch die Durchgangsrichtung des gasförmigen Mediums derart beeinflusst wird, dass sie in der von dem ersten Bereich (17a) der ersten Kammer (17) zur zweiten Kammer (18) beeinflussten Richtung frei ist und gegenüber einer schnellen Strömung, das in der umgekehrten Richtung strömt, abgedichtet ist und gegenüber einer langsamen Strömung, die in derselben umgekehrten Richtung fließt, nicht abgedichtet ist.

8. Vorrichtung (15) gemäß Anspruch 1 bis 7, **dadurch *gekennzeichnet*, *dass*** sie Messmitteln des Drucks unterworfen ist, die mit der Einlassöffnung (20) verbunden sind.

9. Vorrichtung (15) gemäß Anspruch 2 bis 8, ***dadurch gekennzeichnet, dass*** das genannte erste elastische Organ (38) an einem Ende der genannten Einspritzklappe (36) und am anderen Ende des Anschlags gegen die Wand gegenüber der dritten Kammer (19) befestigt ist:

10. Vorrichtung (15) gemäß Anspruch 4 bis 9, ***dadurch gekennzeichnet*, *dass*** das genannte zweite elastische Organ (40) im Innern des genannten Kolbens zwischen dem Boden des genannten Kolbens und dem ersten Führungsteil (9a) des genannten Aufpumporgans (39) angeordnet ist.

11. Vorrichtung (15) gemäß Anspruch 2 bis 10, ***dadurch gekennzeichnet*, *dass*** das dritte elastische Organ (30) an einem Ende der genannten Auslassklappe (27) und am anderen Ende am Anschlag gegen die Wand gegenüber der genannten zweiten Kammer (18) befestigt ist.

## Claims

1. An automatically-controlled pneumatic apparatus (15) for the automatic inflation and deflation of tyres in particular, which consists of a hollow body (16) with an inlet port (20) equipped with means for injecting a gaseous fluid under pressure, specifically air, an inflation port (24) in contact with the tyre at a pressure P0, and an exhaust port (21) for carrying the said gaseous fluid outside the hollow body (16), with the apparatus having a piston (25) that can slide in at least one chamber (17) of the body (16) when the gaseous fluid under pressure is injected through the inlet port (20), with the said piston (25) working in conjunction with a movable assembly (35, 36, 39) in combination with an exhaust valve (27) in such a way that:
- when the gaseous fluid is injected at a pressure P1 > P0, the piston (25) and the movable assembly (35, 36, 39) are displaced linearly against an elastic member (38) with respect to the exhaust valve (27), which remains fixed, up to a stop position of the said piston (25) and the said assembly (35, 36, 39), with this stop position corresponding to the opening of the injection valve (36) and the closing of the exhaust valve (27), ***characterised in that:***
- when the gaseous fluid is injected at a pressure P2 > P1, the piston (25) is displaced against a second elastic member (40) with respect to the movable assembly (35, 36, 39), which remains in its stop position, resulting in the closure of an inflator (39) and the displacement of the exhaust valve (27) against a third elastic member (30) corresponding to the opening of the exhaust valve (27); the injection valve (36) remains open.

2. Apparatus (15) according to claim 1, ***characterised in that*** the body has three internal chambers (17, 18, 19) arranged successively, with the said piston (25) being capable of sliding in the first chamber (17), and dividing it into two regions (17a, 17b) with different pressures, and with openings (22, 23) being made between the second region (17b) of the first chamber (17) and the second chamber (18), and the second (18) and third (19) chambers, thus connecting them.

3. Apparatus (15) according to claim 2, ***characterised in that*** the first region (17a) of the first chamber (17) has the inlet port (20) on one side of the said piston (25) and the second region (17b) of the first chamber (17) has the exhaust port (21) on the other side of the said piston, and the third chamber (19) has the inflation port (24).

4. Apparatus (15) according to claims 2 to 3, ***characterised in that*** the said piston (25) has a hollow piston head (25a) that can slide in an airtight manner in the first chamber (17), and a hollow piston body (25b) in contact with the said piston head (25a) and that can slide in an airtight manner in the exhaust valve (27) closing the opening (22) made between the second region (17b) of the first chamber (17) and the second chamber (18).

5. Apparatus (15) according to claim 4, ***characterised in that*** the piston body (25b) opens into the second chamber (18) and is closed by the movable assembly (35, 36, 39), with the said body (25b) and the said piston head (25a) being in contact with the inlet port (20).

6. Apparatus (15) according to claims 2 to 5, **characterised in that** the said movable assembly (35, 36, 39) has a central axis (35) that can slide in the hollow body (16), with an injection valve (36) and the inflator (39) being mounted on the said axis (35), and with the injection valve (36) being arranged so as to close the opening (23) between the second (18) and third (19) chambers.

7. Apparatus (15) according to claim 6, ***characterised in that*** the said inflator (39) has a guiding element (39a) in the shape of a cylinder that is fixed on the axis (35) and that can be partially inserted, in a non-airtight manner, into the end of the piston body (25b), and another guiding element (39b), which acts as an inflation valve and is also in the shape of a cylinder, with a diameter that is roughly equal to that of the piston body (25b), and which is meant to come into contact with the said piston body (25b), and a third guiding element (39c) in the form of a check valve that is influenced by the direction in which the gaseous fluid moves, such that it is freely open in the direction going from the first region (17a) of the first chamber (17) towards the second chamber (18), airtight against rapid flows going in the opposite direction, and non-airtight against slow flows along this same opposite direction.

8. Apparatus (15) according to claims 1 to 7, ***characterised in that*** pressure-measuring means are connected to the inlet port (20).

9. Apparatus (15) according to claims 2 to 8, ***characterised in that*** one end of the said elastic member (38) is fixed to the said injection valve (36) and the other end is fixed to the opposite wall of the third chamber (19).

10. Apparatus (15) according to claims 4 to 9, ***characterised in that*** the said second elastic member (40) is arranged within the piston between the bottom of the said piston and the first guiding element (39a) of the said inflator (39).

11. Apparatus (15) according to claims 2 to 10, ***characterised in that*** one end of the said third elastic member (30) is fixed to the said exhaust valve (27) and the other end is fixed to the opposite wall of the said second chamber (18).
